# EUROPEAN PATENT APPLICATION

(11) **EP 2 308 806 A1**
(43) Date of publication of application: **13.04.2011**
(21) Application number: 09804805.1
(22) Date of filing: 02.06.2009
(51) Int. Cl.: C03C 8/08, A47J 41/02

(54) **SEALING GLASS**

(30) Priority: 06.08.2008 JP 2008202978
(71) Applicant: Nippon Electric Glass Co., Ltd., Otsu-shi Shiga 520-8639 (JP); Thermos K.K., Tsubame-shi, Niigata 959-0215 (JP)
(72) Inventor: KIKUTANI Takemi, Otsu-shi Shiga 520-8639 (JP); MIURA Ikuo, Tsubame-shi Niigata 959-0215 (JP)
(74) Representative: Tetzner, Michael
(86) International application number: PCT/JP2009/060080
(87) International publication number: WO 2010/016318

(57) **Abstract**

A sealing glass of the present invention is a sealing glass for vacuum sealing an exhaust opening provided in a metal-made vacuum double container, wherein the sealing glass is used in a metal-made vacuum double container having a structure that the sealing glass is placed in a position excepting a position right over the exhaust opening in a vacuum sealing process, the sealing glass is substantially free of a Pb component, and the sealing glass produces a total amount of gases of 900 to 7000 µL/cm³ when a temperature is raised from 30°C to 700°C at 15°C/minute in a vacuum state.

## Description

### Technical Field

The present invention relates to a sealing glass for vacuum sealing an exhaust opening in a metal-made vacuum double container, such as a portable vacuum bottle, a pot, or a jar.

### Background Art

A metal-made vacuum double container has a structure in which an exterior container and an interior container are arranged in an overlapped state and the exterior container and the interior container are sealed with a sealing glass. Further, inthemetal-made vacuum double container, a hollow portion is provided between the exterior container and the interior container and the hollow portion is kept in a vacuum state.

Further, as a method of producing a metal-made vacuum double container, there is proposed a method in which any one of an exterior container and an interior container is provided with an exhaust opening, and then the exhaust opening is vacuum sealed with a sealing glass. For example, Patent Document 1 describes that "in the position right over the evacuation hole, a solid state fusion seal material is provided with a certain gap reserved from the evacuation hole." That is, Patent Document 1 describes a method in which a sealing glass is placed with a distance in a position right over an exhaust opening in a metal-made vacuum double container, and then the container is introduced into a vacuum baking furnace while the state described above is being maintained, to thereby soften and deform the sealing glass, resulting in the vacuum sealing of the exhaust opening.

In recent years, in order to produce a metal-made vacuum double container high in reliability at low cost, there is proposed a metal-made vacuum double container provided with a portion (such as a recess portion, a dent, or a groove) for placing a sealing glass in a position excepting a position right over an exhaust opening. For example, Patent Document 2 describes "a metallic vacuum heat retaining container **characterized in that** the solid hole sealing material-fitting groove for fitting a solid hole sealing material is formed in a predetermined position on the bottom of an outer container, and the bottom surface of the solid hole sealing material-fitting groove is provided, in a predetermined position, with an exhaust hole which is sealed by the stagnation of the hole sealing material fused and flowing down". That is, in the metal-made vacuum double container described in Patent Document 2, a sealing glass-fitting groove for fitting a sealing glass is formed in a predetermined position on the bottomportion of an exterior container, and the bottom surface of the sealing glass-fitting groove is provided, in a predetermined position, with an exhaust opening. The sealing glass is placed in a position excepting a position right over the exhaust opening, and then, in a vacuum sealing process, the sealing glass softens and flows along the sealing glass-fitting groove to seal the exhaust opening. As described above, when the sealing glass is placed in the position excepting a position right over the exhaust opening, the exhaust opening remains open upwardly until the sealing glass arrives at the exhaust opening, resulting in an improvement in exhaust efficiency. Moreover, when the sealing glass softens and flows, the exhaust opening can be sealed.

By the way, PbO-B₂O₃-based glass has been conventionally used for a sealing glass for vacuum sealing an exhaust opening of a metal-made vacuum double container. However, in recent years, a Pb component is regulated as an environment load substance, and under the circumstance described above, a sealing glass substantially free of a Pb component (hereinafter, referred to as a lead-free sealing glass) have been developed (see Patent Documents 3 and 4).

### Prior Art Document

### Patent Document

Patent Document 1: JP 06-141989 A
Patent Document 2: JP 07-289449 A
Patent Document 3: JP 2005-319150 A
Patent Document 4: JP 2005-350314 A

### Summary of Invention

### Technical Problem

A lead-free sealing glass is inferior in wettability with metals compared with a sealing glass for which PbO-B₂O₃-based glass is used, and hence the lead-free sealing glass has property that flowing is not easily caused in a vacuum sealing process.

In a case where the lead-free sealing glass is placed in a position right over an exhaust opening, when the lead-free sealing glass softens and deforms, the lead-free sealing glass drops vertically downward, thereby being able to seal the exhaust opening. In this case, the lead-free sealing glass is not necessary to have flowability, and hence the exhaust opening can be sealed satisfactorily.

However, when the lead-free sealing glass is placed in a position excepting the position right over the exhaust opening, the lead-free sealing glass is required to flow in the vacuum sealing process, thereby sealing the exhaust opening. In this case, as the lead-free sealing glass is inferior in wettability, the lead-free sealing glass is hard to secure desired flowability, and hence is hard to seal the exhaust opening.

Thus, a technical object of the present invention is to produce a lead-free sealing glass that is capable of satisfactorily flowing to seal an exhaust opening even in the case where the lead-free sealing glass is placed in a position excepting a position right over the exhaust opening, to thereby provide a metal-made vacuum double container which is high in reliability.

### Solution to Problem

The inventors of the present invention have made various experiments and have made many studies. As a result, the inventors have found that in a metal-made vacuum double container, in a case where a sealing glass is placed in a position, with a predetermined distance from an exhaust opening, excepting a position right over the exhaust opening in a vacuum sealing process, if a predetermined amount of gas is dissolved in the sealing glass, the sealing glass bubbles when the sealing glass softens in the vacuum sealing process, and hence the flowability of the sealing glass is promoted, resulting in easy sealing of the exhaust opening. Thus, the finding is proposed as the present invention. That is, a sealing glass of the present invention is a sealing glass for vacuum sealing an exhaust opening provided in a metal-made vacuum double container, wherein the sealing glass is used in a metal-made vacuum double container having a structure in which the sealing glass is placed in a position excepting a position right over the exhaust opening in a vacuum sealing process, the sealing glass is substantially free of a Pb component, and the sealing glass produces a total amount of gases of 900 to 7000 µL/cm³ when a temperature is raised from 30°C to 700°C at 15°C/minute in a vacuum state. Here, the phrase "substantially free of a Pb component" refers to the case where the content of the Pb component in a glass composition is 1000 ppm (mass) or less. Further, the "total amount of gases produced" can be measured by using a vacuum gas extraction apparatus (quadrupole mass spectrometer). Note that in the sealing glass of the present invention, the total amount of gases produced was defined with respect to a unit volume of the sealing glass in order to eliminate the influence of the density of glass.

The sealing glass of the present invention is used in the metal-made vacuum double container having the structure in which the sealing glass is placed in a position excepting a position right over the exhaust opening in the vacuum sealing process. With such the structure, the sealing glass before softening and flowing hardly prevents vacuum exhaust, and hence the degree of vacuum in a hollow portion can be enhanced.

The sealing glass of the present invention is substantially free of a Pb component, which can satisfy an environmental demand in recent years.

When the sealing glass of the present invention is placed in the state in which a temperature is raised from 30°C to 700°C at 15°C/minute in a vacuum condition, the total amount of gases produced by the sealing glass is regulated to 900 µL/cm³ or more. This causes the sealing glass to bubble in the vacuum sealing process, thereby being able to promote the flowability of the sealing glass. As a result, even in the case where the sealing glass is placed in a position, with a predetermined distance from the exhaust opening, excepting a position right over the exhaust opening in the vacuum sealing process, it becomes easy for the sealing glass to arrive at the exhaust opening, and hence the exhaust opening is easily sealed. On the other hand, when the sealing glass of the present invention is placed in the state in which a temperature is raised from 30°C to 700°C at 15°C/minute in a vacuum condition, the total amount of gases produced by the sealing glass is regulated to 7000 µL/cm³ or less. This enables easy prevention of the situation that the air tightness of the metal-made vacuum double container is impaired due to a leak occurring from a portion of the sealing glass in which a bubble remains after the vacuum sealing process.

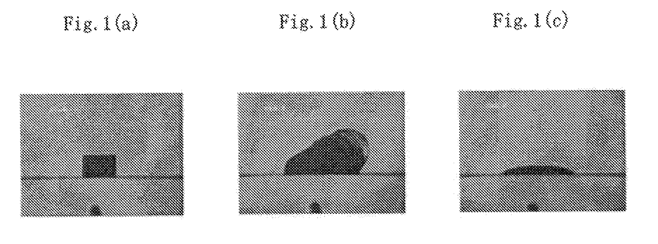

Figs. 1(a), 1(b), and 1(c) are photos showing behavior of a sealing glass of the present invention in a vacuum sealing process. Fig. 1(a) is a photo of the sealing glass before softening and deforming. Fig. 1(b) is a photo showing a state that the sealing glass is softening and deforming, and it is found that the sealing glass is flowing while producing gases. Fig. 1(c) is a photo of the sealing glass after the vacuum sealing process, and it is found that the sealing glass is favorably flowing and no bubble remains in the sealing glass.

Second, the sealing glass of the present invention produces the total amount of gases of 1500 to 5000 µL/cm³ when the temperature is raised from 30°C to 700°C at 15°C/minute in the vacuum state.

Third, the sealing glass of the present invention produces the total amount of gases of 900 to 7000 µL/cm³ when the temperature is raised to 700°C after a pressure is reduced to a range of 1.0×10⁻⁵ to 3.0×10⁻⁵ Pa by using a vacuum pump before the temperature is raised, while operation conditions of the vacuum pump are maintained.

Fourth, the sealing glass of the present invention produces the total amount of gases of 1500 to 5000 µL/cm³ when the temperature is raised to 700°C after a pressure is reduced to a range of 1.0×10⁻⁵ to 3.0×10⁻⁵ Pa by using a vacuum pump before the temperature is raised, while operation conditions of the vacuum pump are maintained.

Fifth, the sealing glass of the present invention is formed by a drop molding method. The drop molding method is a method of molding a sealing glass by dropping a molten glass having a predetermined volume into a mold. When the method is used, machine work such as cutting can be omitted or simplified, and hence the sealing glass can be produced at low cost. Further, when the drop molding method is carried out soon after glass melting, it is possible to maintain a state that gases are dissolved in glass in a large amount. Note that when the molten glass is pressed with a mold or the like after the molten glass is dropped, the height or the like of the sealing glass can be adjusted within a desired range.

Sixth, the sealing glass of the present invention is produced by extruding a molten glass into a mold. This enables simplification of a post process in the production of the sealing glass.

Seventh, the sealing glass of the present invention contains, as a glass composition in terms of mol%, 30 to 70% of SnO, 15 to 40% of P₂O₅, 0 to 20% of ZnO, 0 to 20% of MgO, 0 to 10% of Al₂O₃, 0 to 15% of SiO₂, 0 to 30% of B₂O₃, 0 to 20% of WO₃, and 0 to 20% of Li₂O+Na₂O+K₂O+Cs₂O (total amount of Li₂O, Na₂O, K₂O, and Cs₂O). when the range of the glass composition is controlled as described above, sealing can be carried out at a temperature of 600°C or less, the metal of the metal-made vacuum double container does not easilymetamorphose, and moreover, the surface of the sealing glass neither devitrify nor metamorphose after the vacuum sealing process. As a result, the air tightness of the metal-made vacuum double container can be maintained for a long period.

Eighth, the sealing glass of the present invention contains, as a glass composition in terms of mol%, 20 to 55% of Bi₂O₃, 10 to 40% of B₂O₃, 0 to 30% of ZnO, 0 to 15% of BaO+SrO (total amount of BaO and SrO), 0 to 20% of CuO, and 0 to 10% of Al₂O₃. When the range of the glass composition is controlled as described above, sealing can be carried out at a temperature of 600°C or less, the metal of the metal-made vacuum double container does not easily metamorphose, and moreover, the surface of the sealing glass neither devitrify nor metamorphose after the vacuum sealing process. As a result, the air tightness of the metal-made vacuum double container can be maintained for a long period.

Ninth, the sealing glass of the present invention contains, as a glass composition in terms of mol%, 20 to 60% of V₂O₅, 10 to 40% of P₂O₅, 0 to 30% of Bi₂O₃, 0 to 40% of TeO₂, 0 to 25% of Sb₂O₃, 0 to 20% of Li₂O+Na₂O+K₂O+Cs₂O, and 0 to 30% of MgO+CaO+SrO+BaO (total amount of MgO, CaO, SrO, and BaO). When the range of the glass composition is controlled as described above, sealing can be carried out at a temperature of 600°C or less, the metal of the metal-made vacuum double container does not easily metamorphose, and moreover, the surface of the sealing glass neither devitrify nor metamorphose after the vacuum sealing process. As a result, the air tightness of the metal-made vacuum double container can be maintained for a long period.

Tenth, a method of sealing a metal-made vacuum double container of the present invention, wherein an exhaust opening provided in the metal-made vacuum double container is vacuum sealed, comprises the steps of using a sealing glass substantially free of a Pb component, placing the sealing glass in a position excepting a position right over the exhaust opening, and vacuum sealing the exhaust opening in a vacuum sealing process by causing the sealing glass to arrive at the exhaust opening while causing the sealing glass to produce gases. With this, even when a lead-free sealing glass inferior in wettability with metals is used, the flowability of the lead-free sealing glass can be promoted, and hence sealing the exhaust opening is easily carried out.

### Brief Description of Drawings

[Fig. 1] Photos showing behavior of a sealing glass of the present invention in a vacuum sealing process.
[Fig. 2] Data showing behavior of gas production of the sealing glass of the present invention in the vacuum sealing process.
[Fig. 3] A conceptual diagram showing a method of bubbling gas containing a large amount of H₂O in a molten glass.
[Fig. 4] An explanatory diagram showing a structure of a metal-made vacuum double container.
[Fig. 5] A schematic view showing a state before the sealing glass flows in the vacuum sealing process.
[Fig. 6] A schematic cross-sectional view showing the state before the sealing glass flows in the vacuum sealing process.
[Fig. 7] A schematic cross-sectional view showing a state after the sealing glass flows in the vacuum sealing process.
[Fig. 8] A schematic view showing a protrusion portion occurring on the sealing glass.

### Description of Embodiments

In a sealing glass of the present invention, when a temperature is raised from 30°C to 700°C at 15°C/minute in a vacuum state (preferably a state that after a pressure is reduced to a range of 1.0×10⁻⁵ to 3.0×10⁻⁵ Pa by using a vacuum pump before the temperature is raised, while the operation conditions of the vacuum pump are maintained), the total amount of gases produced is 900 to 7000 µL/cm³ or preferably 1200 to 6000 µL/cm³. When flowability and the presence of remaining gases after a vacuum sealing process are taken into consideration in a comprehensive manner, the total amount of gases produced is 1500 to 5500 µL/cm³ or particularly 2500 to 5000 µL/cm³. When the total amount of gases produced is too small, the sealing glass does not easily flow to an exhaust opening, and hence it becomes difficult to maintain the air tightness of a metal-made vacuum double container. Moreover, when the total amount of gases produced is too small, it becomes difficult to allow gases dissolved in the sealing glass to emerge as bubbles and remove them in the vacuum sealing process. As a result, gas bubbles remain in the sealing glass after the vacuum sealing process and leaks generate from the gas bubble portions in the sealing glass, and hence it becomes difficult to maintain the air tightness of the metal-made vacuum double container. On the other hand, when the total amount of gases produced is too large, the sealing glass produces too many bubbles in the vacuum sealing process. As a result, gas bubbles remain in the sealing glass after the vacuum sealing process and leaks generate from the gas bubble portions in the sealing glass, and hence it becomes difficult to maintain the air tightness of the metal-made vacuum double container. Note that the pressure ranging from 1.0×10⁻⁵ to 3.0×10⁻⁵ Pa is a more reduced state than that during an actual vacuum sealing process of the metal-made vacuum double container. However, when the pressure is reduced to a range of 1.0×10⁻⁵ to 3.0×10⁻⁵ Pa by using a vacuum pump before the temperature is raised, adsorptive gases in a vacuum baking furnace can be removed and most of the gases dissolved in the sealing glass can be released. As a result, it is possible to obtain measurement values that are favorable in reliability and repeatability.

In the vacuum sealing process, a temperature region in which gases are produced from the sealing glass depends on the thermal physical properties of the sealing glass. The temperature region is equal to or more than around the yield point of the sealing glass, and specific temperature region is 200 to 600°C or particularly 350 to 600°C. Further, in order to prevent a metal (such as stainless steel) used in the metal-made vacuum double container from metamorphosing in the vacuum sealing process, it is required to control the upper limit of a sealing temperature to 600°C or less. When the above is taken into consideration, most of the gases remaining in the sealing glass are released in the above-mentioned temperature region.

The sealing glass starts releasing the dissolved gases at around 350°C in the vacuum sealing process and starts flowing. However, when the sealing glass and the exhaust opening are arranged with a distance, the sealing glass does not immediately reach the exhaust opening in the temperature region described above. As a result, a hollow portion is converted to a sufficient vacuum state through the exhaust opening. After that, the sealing glass completely flows, seals the exhaust opening, and is then cooled to room temperature. While the sealing glass is flowing, the vacuum state in the hollow portion is maintained. As the hollow portion in the metal-made vacuum double container is higher in the degree of vacuum, the metal-made vacuum double container is more excellent in thermal insulation property. In this regards, it is advantageous that the sealing glass and the exhaust opening are arranged with a gap, because exhaust efficiency is enhanced. The sealing glass of the present invention can be suitably applied to this structure, because the sealing glass is excellent in flowability.

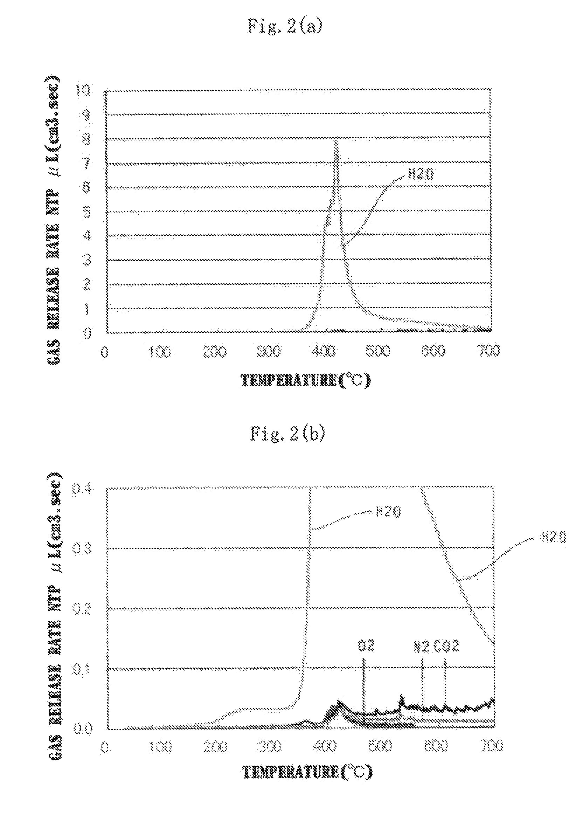

The gases produced are mainly H₂O, O₂, N₂, CO₂, N₂, and CO, and are particularly H₂O. Figs. 2(a) and 2(b) are data showing behavior of the gas production of the sealing glass of the present invention in the vacuum sealing process, and show the production rate of the gases that are produced when a temperature is raised from room temperature to 700°C at 15°C/minute. From Fig. 2(a), it is found that the main component of the gases produced is H₂O, and H₂O is produced in the temperature range from around 350°C to 700°C. Fig. 2 (b) is a variation of Fig. 2 (a) with its vertical scale modified in order to clarify the production of gases except H₂O. From Fig. 2(b), it is found that the gases except H₂O also start producing at around 350°C, but the production amount of those gases is small.

The sealing glass of the present invention is preferably formed by a drop molding method. When a molten glass is directly formed into the sealing glass by the drop molding method, gases can remain in the sealing glass in a larger amount than that when formed by a redraw method (a method involving drawing a molten glass into a bar-shaped glass, annealing the bar-shaped glass, and cutting the bar-shaped glass into pieces having a predetermined size), and further, a thermal history can be reduced. As a result, devitrification does not easily occur in the glass. In addition, in the drop molding method, the molten glass is preferably produced directly from a glass batch. This leads to difficulty in the reduction of the total amount of gases dissolved in the sealing glass.

In the drop molding method, the volume of the sealing glass can be controlled by adjusting the outer diameter of a nozzle and the viscosity of the molten glass. The volume of the sealing glass is preferably equal to or less than that of a recess portion formed around the exhaust opening in the metal-made vacuum double container. When the volume of the sealing glass is too larger than that of the recess portion, cracks easily occur in the sealing glass portion because of the difference in expansion between the sealing glass and a metal (such as SUS304 series). As a result, it becomes difficult to maintain the air tightness of the hollow portion. Meanwhile, when the volume of the sealing glass is a minimum volume necessary for the sealing glass to reach the exhaust opening, it may not be possible to surely seal the exhaust opening. Thus, the volume of the sealing glass is preferably 50% to 120% of the volume of the recess portion formed around the exhaust opening.

The sealing glass of the present invention can be produced by extruding a molten glass into a mold. When the sealing glass is produced by this method, the total amount of gases dissolved in the sealing glass is difficult to decline, and devitrification property of the glass is high. Thus, this method is effective when the drop molding is difficult to adopt.

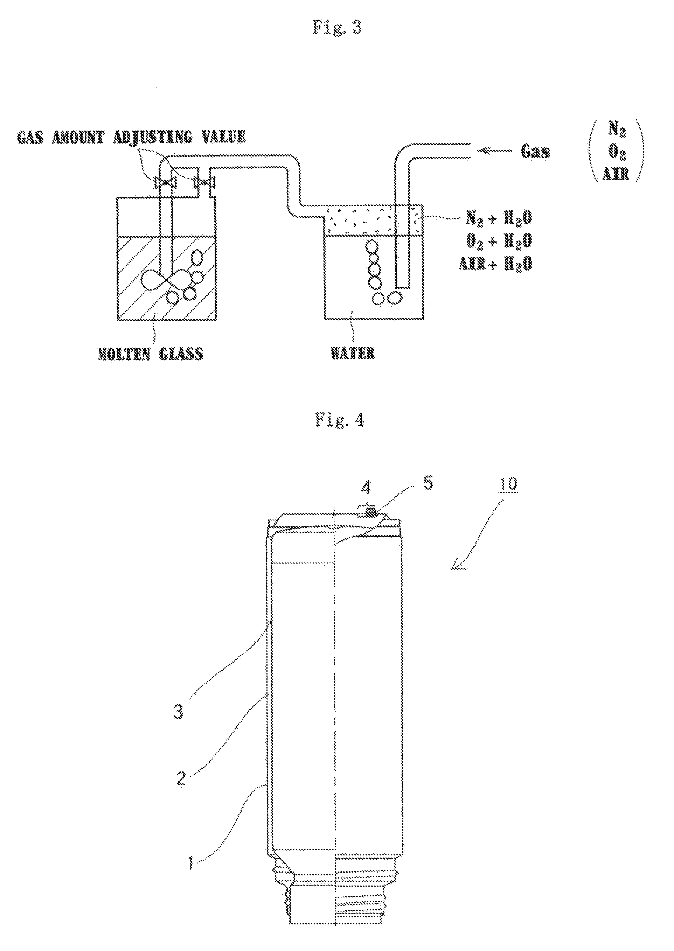

Methods of introducing a gas into the sealing glass include (1) a method of introducing a gas from a glass material, (2) a method of introducing a gas during melting, and (3) a method of introducing a gas during forming. Examples of the method (1) include a method in which the releasing amount of H₂O is increased in a vacuum sealing process by using a material high in water content such as a hydroxide material and a method in which the releasing amount of CO₂ is increased in the vacuum sealing process by using a carbonate compound material. Examples of the method (2) include a method in which a melting temperature is lowered to as low a temperature as possible, to be specific, a method in which the melting temperature is lowered to 1000°C or less, a method in which a melting time is shortened, to be specific, a method in which after a glass batch is introduced into a melting furnace, the time necessary for the glass batch to melt is shortened to 5 hours or less, and a method in which a gas containing a large amount of H₂O is introduced in a melting atmosphere or in a molten glass. In particular, a method of directly bubbling the gas containing a large amount of H₂O in the molten glass (for example, as shown in Fig. 3, a method in which after a large amount of H₂O is allowed to be contained in a gas by bubbling gases such as air, N₂, and O₂ in water, the resultant gas is directly bubbled in a molten glass) can introduce a larger amount of the gas in the sealing glass compared with the method in which the gas containing a large amount of H₂O is introduced in the melting atmosphere. Examples of the method (3) include a method in which a molten glass is dropped in a droplet shape by using a drop molding method to form a glass instead of extruding the molten glass into a mold.

Next, there are described methods of introducing a gas into the sealing glass in the case of using SnO-P₂O₅-based glass.

In order that H₂O is released in a larger amount in the vacuum sealing process, it is preferred that an orthophosphate (85%) be used as an introducing material of P₂O₅ instead of a phosphate compound material and a zinc oxide be used as an introducing material of ZnO instead of a zinc metaphosphate. Further, in order that CO₂ is released in a larger amount in the vacuum sealing process, it is preferred that a carbonate compound material be used as a glass material.

Further, in melting methods, in order to introduce a gas into glass, it is preferred that the melting temperature be lowered to as low a temperature as possible, to be specific, be lowered to 900°C or less, or the melting time be shortened to 5 hours or less, and in order to prevent the valence of tin from changing from divalent to tetravalent, it is more preferred that glass be melted in an inert atmosphere such as a nitrogen atmosphere, an argon atmosphere, or a helium atmosphere. In order to stabilize the valence of tin in the glass, it may be considered to use a method of bubbling an inert gas in a molten glass. However, in this case, in order that the sealing glass contains a gas in a larger amount, it is preferred that bubbling be not performed or an inert gas containing moisture in a large amount be used. Further, in order to prevent the total amount of gases contained in a molten glass from reducing, it is preferred that a glass batch be not melted under a reduced pressure environment.

It is possible to use any of platinum and its alloys, zirconium and its alloys, and refractories such as quartz glass, alumina, and zirconia as a material of a melting furnace (melting crucible) for this glass series. When the sealing glass is formed by drop molding, a nozzle for dropping is required, and hence the melting furnace and the nozzle must be welded. When the weldability between the melting furnace and the nozzle is taken into consideration, any of platinum and its alloys and zirconium and its alloys is suitable as the material of the melting furnace.

Next, there are described methods of introducing a gas into the sealing glass in the case of using Bi₂O₃-B₂O₃-based glass.

In order that H₂O is released in a larger amount in the vacuum sealing process, a hydrate material such as aluminum hydroxide is preferably used, and in order that CO₂ is released in a larger amount in the vacuum sealing process, a carbonate compound material is preferably used.

Further, in melting methods, in order to introduce a gas into glass, it is preferred that the melting temperature be lowered to as low a temperature as possible, to be specific, be lowered to 1000°C or less or preferably to 950°C or less. Bi₂O₃-B₂O₃-based glass is preferably melted in the air in order to reduce melting cost.

It is possible to use any of platinum and its alloys and refractories such as alumina and zirconia as a material of a melting furnace (melting crucible) for this glass series. When the sealing glass is formed by drop molding, a nozzle for dropping is required, and hence the melting furnace and the nozzle must be welded. When the weldability between the melting furnace and the nozzle is taken into consideration, any of platinum and its alloys is suitable as the material of the melting furnace.

Next, there are described methods of introducing a gas into the sealing glass in the case of using V₂O₅-P₂O₅-based glass.

In order that H₂O is released in a larger amount in the vacuum sealing process, it is preferred that an orthophosphate (85%) be used as an introducing material of P₂O₅ instead of a phosphate compound material and a zinc oxide be used as an introducing material of ZnO instead of a zinc metaphosphate. Further, in order that CO₂ is released in a larger amount in the vacuum sealing process, it is preferred that a carbonate compound material be used as a glass material.

Further, in melting methods, in order to introduce a gas into glass, it is preferred that the melting temperature be lowered to as low a temperature as possible, to be specific, be lowered to 1000°C or less or preferably to 950°C or less. V₂O₅-P₂O₅-based glass is preferably melted in the air in order to reduce melting cost.

It is possible to use any of platinum and its alloys and refractories such as alumina and zirconia as a material of a melting furnace (melting crucible) for this glass series. When the sealing glass is formed by drop molding, a nozzle for dropping is required, and hence the melting furnace and the nozzle must be welded. When the weldability between the melting furnace and the nozzle is taken into consideration, any of platinum and its alloys is suitable as the material of the melting furnace.

The reasons that the ranges in the glass composition of the SnO-P₂O₅-based glass were limited to those described above are described below.

SnO is a component that lowers the melting point of glass. When the content of SnO is less than 30%, the viscosity of glass becomes higher, and hence the sealing temperature tends to become higher. When the content of SnO is more than 70%, vitrification does not easily occur. In particular, when the content of SnO is set to 65% or less, the devitrification of glass at the time of sealing can be easily prevented. When the content of SnO is set to 40% or more, the flowability of glass can be enhanced, and hence air tightness reliability can be enhanced.

P₂O₅ is a glass-forming oxide. When the content of P₂O₅ is less than 15%, obtaining thermally stable glass becomes difficult. When the content of P₂O₅ is in the range of 15 to 40%, thermally stable glass can be obtained. Meanwhile, when the content of P₂O₅ is more than 40%, moisture resistance tends to decline. On the other hand, when the content of P₂O₅ is 20% or more, the thermal stability of glass is improved, and when the content of P₂O₅ is more than 35%, there appears the tendency that the weather resistance of the sealing glass slightly declines. Thus, the content of P₂O₅ is 15 to 40% or preferably 20 to 35%.

ZnO is an intermediate oxide and is not an essential component. However, ZnO is a component that has a significant effect of stabilizing glass by addition in a small amount. The content of ZnO is preferably set to 0.5% or more. However, when the content of ZnO is more than 20%, devitrified crystals tend to appear on the surface of glass at the time of sealing. Thus, the content of ZnO is 0 to 20% or preferably 0.5 to 15%.

MgO is a network-modifying oxide and is not an essential component. However, MgO has an effect of stabilizing glass, and hence MgO may be added in the glass component up to 20%. When the content of MgO is more than 20%, devitrified crystals tend to appear on the surface of glass at the time of sealing.

Al₂O₃ is an intermediate oxide and is not an essential component. However, Al₂O₃ has an effect of stabilizing glass and has an effect of lowering the thermal expansion coefficient of glass, and hence Al₂O₃ may be added in the glass component up to 10%. Note that when the content of Al₂O₃ is more than 10%, the softening temperature rises, and hence the sealing temperature tends to rise. Thus, the content of Al₂O₃ is 0 to 10%, and when the stability, thermal expansion coefficient, flowability, and the like of glass are taken into consideration, the content of Al₂O₃ is preferably 0.5 to 5%.

SiO₂ is a glass-forming oxide and is not an essential component. However, SiO₂ has an effect of suppressing devitrification, and hence SiO₂ may be added in the glass component up to 15%. Note that when the content of SiO₂ is more than 10%, the softening temperature rises, and hence the sealing temperature tends to rise. Thus, the content of SiO₂ is 0 to 15% or preferably 0 to 10%.

B₂O₃ is a glass-forming oxide and is not an essential component. However, B₂O₃ is a component that is capable of stabilizing glass by addition in a small amount. Note that when the content of B₂O₃ is more than 30%, the viscosity of glass becomes too high and the flowability of the sealing glass remarkably declines in the vacuum sealing process, with the result that the air tightness of the metal-made vacuum double container may be impaired. The content of B₂O₃ is 0 to 30%, and when the flowability is required to be improved, the content of B₂O₃ is limited to 25% or less or particularly to 0.5 to 25%.

WO₃ is not an essential component. However, WO₃ is a component that improves the wettability of glass with respect to a metal such as stainless steel, and the effect enhances the flowability of the sealing glass. Thus, it is preferred that WO₃ be added in the glass composition positively. Further, WO₃ also has an effect of lowering the thermal expansion coefficient. Note that when the content of WO₃ is more than 20%, the sealing temperature tends to rise. Thus, the content of WO₃ is 0 to 20%, and when the flowability is taken into consideration, the content of WO₃ is 3 to 10%.

Li₂O+Na₂O+K₂O+Cs₂O are not essential components. However, if at least one kind out of the alkali metal oxides is added in the glass composition, the adhesiveness of glass to a metal such as stainless steel can be enhanced. However, when the content of Li₂O+Na₂O+K₂O+Cs₂O is more than 20%, glass tends to devitrify at the time of sealing. Note that when the surface devitrification and flowability are taken into consideration, the content of Li₂O+Na₂O+K₂O+Cs₂O is preferably 10% or less.

The SnO-P₂O₅-based glass according to the present invention may also contain other components at up to 40% in addition to the above-mentioned components.

A lanthanoid oxide is not an essential component. However, the lanthanoid oxide is a component that can improve the weather resistance when the oxide is added in the glass component at 0.1% or more. On the other hand, when the content of the lanthanoid oxide is more than 25%, the sealing temperature tends to rise. The content of the lanthanoid oxide is preferably 0 to 15% or particularly preferably 0.1 to 15%. It is possible to use La₂O₃, CeO₂, Nd₂O₃, or the like as the lanthanoid oxide.

When a rare-earth oxide such as Y₂O₃ is added in addition to the lanthanoid oxide, the weather resistance can be further enhanced. The content of the rare-earth oxide is preferably 0 to 5%.

Moreover, stabilizing components such as MoO₃, Nb₂O₅, TiO₂, ZrO₂, CuO, MnO, In₂O₃, MgO, CaO, SrO, and BaO may be contained at up to 35% in a total amount. When the total content of those stabilizing components is more than 35% in a total amount, the balance of the components in the glass composition is impaired. As a result, glass becomes thermally unstable in reverse, resulting in difficulty in the formation of a glass.

The content of MoO₃ is preferably 0 to 20% or particularly preferably 0 to 10%. When the content of MoO₃ is more than 20%, the viscosity of glass tends to increase.

The content of Nb₂O₅ is preferably 0 to 15% or particularly preferably 0 to 10%. When the content of Nb₂O₅ is more than 15%, glass tends to become thermally unstable. The content of TiO₂ is preferably 0 to 15% or particularly preferably 0 to 10%. When the content of TiO₂ is more than 15%, glass tends to become thermally unstable. The content of ZrO₂ is preferably 0 to 15% or particularly preferably 0 to 10%. When the content of ZrO₂ is more than 15%, glass tends to become thermally unstable.

The content of CuO is preferably 0 to 10% or particularly preferably 0 to 5%. When the content of CuO is more than 10%, glass tends to become thermally unstable. The content of MnO is preferably 0 to 10% or particularly preferably 0 to 5%. When the content of MnO is more than 10%, glass tends to become thermally unstable.

In₂O₃ is a component that remarkably enhances the weather resistance. The content of In₂O₃ is preferably 0 to 5%. When the content of In₂O₃ is more than 5%, batch cost soars.

The content of MgO+CaO+SrO+BaO is preferably 0 to 15% or particularly preferably 0 to 5%. When the content of MgO+CaO+SrO+BaO is more than 15%, glass tends to become thermally unstable.

The above-mentioned SnO-P₂O₅-based glass has a glass transition point of about 270 to 350°C, a yield point of about 320 to 380°C, and a thermal expansion coefficient of about 100 to 130×10⁻⁷/°C in the temperature range of 30 to 250°C, and shows favorable flowability in the temperature range of 400 to 600°C.

The reasons that the ranges in the glass composition of the Bi₂O₃-B₂O₃-based glass were limited to those described above are described below.

Bi₂O₃ is a main component for reducing the softening point. The content of Bi₂O₃ is 20 to 55% or preferably 25 to 50%. When the content of Bi₂O₃ is less than 20%, the softening point becomes too high, with the result that glass tends to become difficult to flow in a vacuum at 600°C or less. When the content of Bi₂O₃ is more than 55%, obtaining thermally stable glass tends to become difficult.

B₂O₃ is an essential component as a glass-forming component. The content of B₂O₃ is 10 to 40% or preferably 18 to 40%. When the content of B₂O₃ is less than 10%, glass becomes unstable and easily devitrifies. Further, when the content of B₂O₃ is less than 10%, the precipitation rate of crystals becomes extremely large in the vacuum sealing process even in the case where no devitrified crystal is generated at the time of melting, and hence securing desired flowability becomes difficult. On the other hand, when the content of B₂O₃ is more than 40%, the viscosity of glass becomes too high, with the result that the glass becomes difficult to flow in a vacuum at 600°C or less.

ZnO is a component contributing to stabilizing glass. The content of ZnO is 0 to 30% or preferably 15 to 25%. When the content of ZnO is more than 30%, glass easily devitrifies and the flowability tends to decline.

BaO+SrO are components suppressing devitrification at the time of melting. The content of BaO+SrO is 0 to 15%. When the content of BaO+SrO is more than 15%, the balance of the components in the glass composition is impaired, with the result that glass easily devitrifies and the flowability tends to decline.

CuO is a component contributing to stabilizing glass. The content of CuO is 0 to 20% or preferably 0.1 to 15%. When the content of CuO is more than 20%, glass easily devitrifies and the flowability tends to decline.

Al₂O₃ is a component that further stabilizes glass. The content of Al₂O₃ is 10% or less or preferably 5% or less. When the content of Al₂O₃ is more than 10%, the viscosity of glass becomes too high, with the result that the glass becomes difficult to flow in a vacuum at 600°C or less.

The Bi₂O₃-B₂O₃-based glass according to the present invention may also contain other components at up to 30% in addition to the above-mentioned components.

Fe₂O₃ is a component contributing to stabilizing glass. The content of Fe₂O₃ is 0 to 5% or preferably 0 to 2%. When the content of Fe₂O₃ is more than 5%, the balance of the components in the glass composition is impaired, with the result that glass tends to become thermally unstable in reverse.

SiO₂ is a component that enhances the weather resistance. SiO₂ may be added at up to 3% (preferably 1%). When the content of SiO₂ is more than 1%, the softening point becomes too high, with the result that glass becomes difficult to flow in a vacuum at 600°C or less.

The Bi₂O₃-B₂O₃-based glass according to the present invention may contain each of WO₃, Sb₂O₃, and In₂O₅ in the glass composition at up to 5% for the stabilization of glass.

The Bi₂O₃-B₂O₃-based glass according to the present invention may also contain each of MgO, La₂O₃, TiO₂, ZrO₂, V₂O₅, Nb₂O₅, MoO₃, TeO₂, Ag₂O, Na₂O, K₂O, and Li₂O at up to 5% in addition to the above-mentioned components for adjusting the viscosity and thermal expansion coefficient of glass.

The above-mentioned Bi₂O₃-B₂O₃-based glass has a glass transition point of about 300 to 380°C, a yield point of about 330 to 390°C, and a thermal expansion coefficient of about 100 to 130×10⁻⁷/°C in the temperature range of 30 to 250°C, and shows favorable flowability in the temperature range of 400 to 600°C.

The reasons that the ranges in the glass composition of the V₂O₅-P₂O₅-based glass were limited to those described above are described below.

V₂O₅ is a network-forming oxide and a main component for reducing the softening point. The content of V₂O₅ is 20 to 60% or preferably 35 to 55%. When the content of V₂O₅ is less than 20%, the softening point becomes too high, with the result that glass tends to become difficult to flow in a vacuum at 600°C or less. When the content of V₂O₅ is more than 60%, obtaining thermally stable glass tends to become difficult.

P₂O₅ is a glass-forming oxide. When the content of P₂O₅ is in the range of less than 10%, the stability of glass becomes insufficient, and an effect of changing glass to one having a low-melting point becomes poor. When the content of P₂O₅ is in the range of 10 to 40%, high thermal stability can be provided to glass. However, when the content of P₂O₅ is more than 40%, the moisture resistance declines. Meanwhile, when the content of P₂O₅ is 20% or more, glass becomes thermally stable, and when the content of P₂O₅ is more than 35%, there is the tendency that the weather resistance slightly declines. Thus, the content of P₂O₅ is preferably 20 to 35%.

Bi₂O₃ is an intermediate oxide and is a component that reduces the softening point. In the V₂O₅-P₂O₅-based glass, Bi₂O₃ is a component that is not necessarily required. When the V₂O₅-P₂O₅-based glass contains Bi₂O₃ at 1% or more, the weather resistance can be enhanced. When the V₂O₅-P₂O₅-based glass contains Bi₂O₃ at 3% or more, the weather resistance can be further enhanced. On the other hand, when the content of Bi₂O₃ is more than 30% in the V₂O₅-P₂O₅-based glass, the softening point becomes too high, with the result that the flowability may be impaired. Thus, when the balance between the weather resistance and the flowability is taken into consideration, the content of Bi₂O₃ is preferably 0 to 30%.

TeO₂ is an intermediate oxide and is a component that reduces the temperature of glass. However, when the content of TeO₂ is more than 40%, the thermal expansion coefficient may become too high. In addition, containing TeO₂ in the glass composition in a large amount leads to the soaring of the cost of the sealing glass because TeO₂ is an expensive material, and hence is not realistic. Taking those into consideration, the content of TeO₂ is preferably 0 to 40%. In particular, when the content of TeO₂ is 0 to 25%, the effect of thermal stability can be provided while the effect of enabling a low melting temperature is not inhibited.

Sb₂O₃ is a network-forming oxide and is a component that stabilizes glass by striking the balance between the changes of the valences of vanadium in the V₂O₅-P₂O₅-based glass. When the content of Sb₂O₃ is more than 25%, glass tends to change to one having a high melting point. Thus, the content of Sb₂O₃ is 0 to 25%. Note that Sb₂O₃ is designated as a deleterious substance for medicinal purposes outside under "Poisonous and Deleterious Substances Control Law." Thus, when environmental load is taken into consideration, being substantially free of Sb₂O₃ is preferred. Here, the phrase "substantially free of Sb₂O₃" refers to the case where the content of Sb₂O₃ in the glass composition is 1000 ppm (mass) or less.

Li₂O+Na₂O+K₂O+Cs₂O are not essential components. However, if at least one kind out of the alkali metal oxides is added in the glass composition, the adhesiveness of glass with a substance to be sealed can be enhanced. However, when the content of Li₂O+Na₂O+K₂O+Cs₂O is more than 20%, glass tends to devitrify at the time of firing. Note that when the devitrification and flowability are taken into consideration, the content of Li₂O+Na₂O+K₂O+Cs₂O is preferably 15% or less. Further, Li₂O and Na₂O out of the alkali metal oxides have a high effect of improving an adhesive force with a glass substrate, and hence Li₂O and Na₂O are desirably used. Note that when each of the alkali metal oxides is contained alone at 15% or more, glass tends to devitrify. Thus, when the content of the alkali metal oxides is set to at 15% or more, a plurality of the alkali metal oxides are preferably used in combination.

MgO+CaO+SrO+BaO are network-modifying oxides and are components that stabilize glass. The content of MgO+CaO+SrO+BaO is 0 to 30%. Note that when the content of MgO+CaO+SrO+BaO is more than 30%, the balance of the components in the glass composition is impaired. As a result, glass becomes thermallyunstable in reverse and tends to devitrify at the time of forming. In order to obtain thermally stable glass, the content of MgO+CaO+SrO+BaO is preferably 25% or less. In particular, out of the alkaline-earth metal oxides, BaO is a component that exhibits the effect of thermal stability most significantly, and MgO is also a component that significantly exhibits the effect of thermal stability.

Except for the above-mentioned components, ZnO, SiO₂, B₂O₃, CuO, Fe₂O₃, WO₃, MoO₃, and the like may be added in the glass composition at up to 35% in order to stabilize glass.

The above-mentioned V₂O₅-P₂O₅-based glass has a glass transition point of about 300 to 330°C, a yield point of about 330 to 350°C, and a thermal expansion coefficient of about 90 to 110×10⁻⁷/°C in the temperature range of 30 to 250°C, and shows favorable flowability in the temperature range of 400 to 600°C.

The sealing glass of the present invention may have any shape as long as the sealing glass can be stably placed in a metal-made vacuum double container. For example, a right-angled parallelepiped, a circular cylinder, a sphere, a hemisphere, an oval sphere, an oval shape, or a shape similar to any of the above is considered.

The sealing glass of the present invention is preferably substantially free of a refractory filler powder. This can leads to a reduction in the production cost of the sealing glass.

In the sealing glass of the present invention, a metal to be used in the metal-made vacuum double container is preferably stainless steel or more preferably stainless steel SUS304. Those metals have property of resisting to oxidation by heat treatment. When any of those metals is used, the results are that the metal-made vacuum double container becomes hard to be deteriorated and that maintaining the vacuum state of a hollow portion becomes easy.

The sealing glass of the present invention is preferably placed with a distance from an exhaust opening, the distance being equal to or more than the radius of the sealing glass and being equal to or six times less than the diameter of the exhaust opening. This can efficiently seal the exhaust opening while exhaust efficiency is enhanced.

The method of sealing a metal-made vacuum double container of the present invention, wherein an exhaust opening provided in the metal-made vacuum double container is vacuum sealed, is **characterized in that** a sealing glass substantially free of a Pb component is used, and after the sealing glass is placed in a position excepting a position right over the exhaust opening, the exhaust opening is vacuum sealed in a vacuum sealing process by causing the sealing glass to reach the exhaust opening while producing gases from the sealing glass. Note that the technical features (suitable embodiments, suitable numerical ranges, and the like) of the method of sealing a metal-made vacuum double container of the present invention are described in the section of the description of the sealing glass of the present invention, and hence the description of the technical features is omitted for convenience sake here.

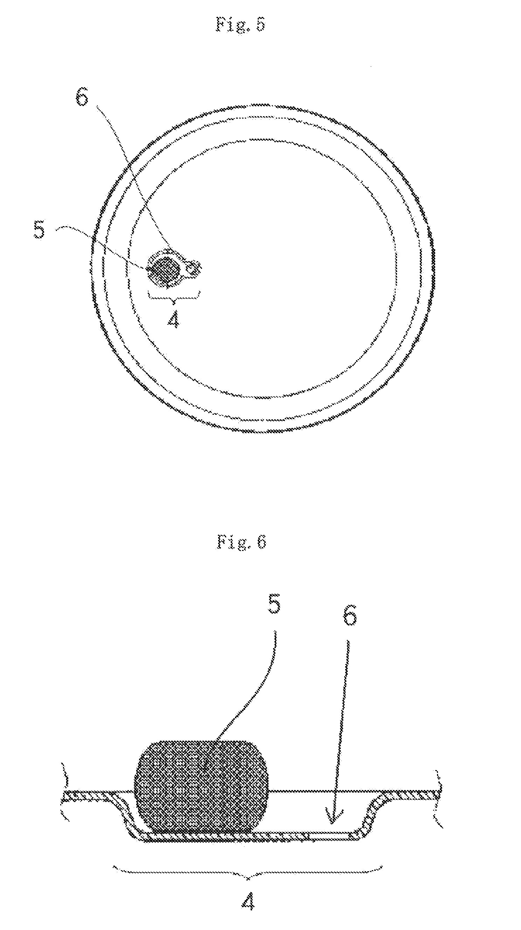

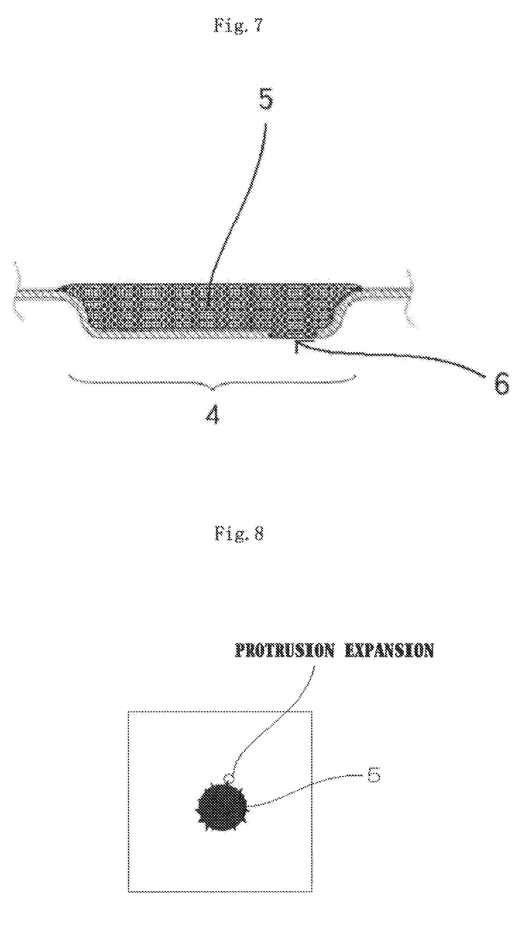

The method of sealing a metal-made vacuum double container of the present invention is described. Fig. 4 is an explanatory diagram showing the structure of a metal-made vacuum double container 10. A hollow portion 2 is provided between an exterior container 1 and an interior container 3 of the metal-made vacuum double container 10. Fig. 5 is an explanatory diagram showing the bottom of the exterior container 1 before a sealing glass 5 flows in a vacuum sealing process. Fig. 6 is a schematic cross-sectional view showing the state of the vicinity of an exhaust opening 6 before the sealing glass 5 flows in the vacuum sealing process. Fig. 7 is a schematic cross-sectional view showing the state of the vicinity of the exhaust opening 6 after the sealing glass 5 flows in the vacuum sealing process. Here, the exhaust opening 6 is provided in the bottom of the exterior container 1 in order to convert the state of the hollow portion 2 in the metal-made vacuum double container 10 to a vacuum state. Further, a recess portion 4 is provided on the bottom of the exterior container 1 along the horizontal direction of the exhaust opening 6 so that the sealing glass 5 is placed thereon.

The metal-made vacuum double container 10 is arranged in the vacuum sealing process so that the exhaust opening 6 of the metal-made vacuum double container 10 of Fig. 1 is placed in the lower position, that is, the bottom shown in Fig. 5 is placed in the upper position. Further, the sealing glass 5 is placed along the horizontal direction of the exhaust opening 6.

The method of sealing a metal-made vacuum double container of the present invention is described specifically. First, the metal-made vacuum double container 10 is introduced into a vacuum baking furnace in the state that the exhaust opening 6 of the metal-made vacuum double container 10 of Fig. 1 is placed in the lower position, that is, the bottom shown in Fig. 5 is placed in the upper position, and is then heated to a temperature equal to or less than the yield point of the sealing glass 5 in a vacuum state. During that process, the state of the hollow portion 2 is converted to a vacuum state. Next, the metal-made vacuum double container 10 is heated to a temperature equal to or more than the yield point of the sealing glass 5 while the vacuum state of the hollow portion 2 is being kept. During that process, the sealing glass 5 softens and flows in the horizontal direction while bubbling, and finally reaches the exhaust opening, followed by sealing the exhaust opening. Then, such a state as shown in Fig. 7 results. Examples

### Example 1

Hereinafter, the present invention is described based on examples. Tables 1 to 6 show examples (Samples a to 1) of the present invention and comparative examples (Samples m to v).

**[Table 1]**

| | | Example | | | | |
|---|---|---|---|---|---|---|
| | | a | b | c | d | e |
| Glass composition (mol%) | SnO | 59 | 62.5 | 56 | 52 | 57 |
| | P₂O₅ | 24.5 | 19 | 23.4 | 26.5 | 30 |
| | ZnO | 3.1 | 3.5 | 8.2 | 9.8 | 7.5 |
| | MgO | - | - | 0.5 | - | - |
| | Al₂O₃ | 1.4 | 0.5 | 1.8 | 1.5 | 2 |
| | SiO₂ | - | - | 5.5 | 1.5 | - |
| | B₂O₃ | - | 6 | - | 4.5 | - |
| | WO₃ | 9 | 5 | 1.5 | - | - |
| | Li₂O | 1.2 | 0.5 | - | 1.2 | - |
| | Na₂O | - | 0.4 | 1.3 | - | 3 |
| | K₂O | 1.8 | 2.1 | 1.8 | 1.5 | 0.5 |
| | BaO | - | 0.5 | - | - | - |
| | CeO₂ | - | - | - | 1.5 | - |
| Melting atmosphere | | N₂ Melting atmosphere | Ar Melting atmosphere | N₂ Melting atmosphere | Ar Melting atmosphere | N₂ Melting atmosphere (Water vapor) |
| Pressure during melting | | Atmospheric pressure | Atmospheric pressure | Atmospheric pressure | Atmospheric pressure | Atmospheric pressure |
| Bubbling | | Not performed | Not performed | Not performed | Not performed | Performed |
| Forming method | | Drop molding | Drop molding | Drop molding | Drop molding | Drop molding |
| Glass transition point (°C) | | 314 | 330 | 309 | 345 | 298 |
| Yield point (°C) | | 338 | 355 | 335 | 364 | 321 |
| Thermal expansion coefficient (×10⁻⁷/°C) | | 118 | 110 | 120 | 104 | 123 |
| Total amount of gases produced (µL/cm³) | | 2781 | 3554 | 1989 | 3874 | 6156 |
| Flowability | | ○ | ○ | ○ | ○ | ○ |
| Remaining bubble | | ○ | ○ | ○ | ○ | ○ |
| Protrusion expansion | | Present | Present | Present | Present | Present |

**[Table 2]**

| | | Example | | | |
|---|---|---|---|---|---|
| | | f | g | h | i |
| Glass composition (mol%) | Bi₂O₃ | 43.8 | 45.9 | 44.5 | 44 |
| | B₂O₃ | 23.5 | 20 | 20.6 | 21.3 |
| | ZnO | 21.5 | 31.8 | 23.5 | 25 |
| | BaO | 4.9 | - | 5.1 | 4.5 |
| | SrO | - | - | 0.2 | 1 |
| | CuO | 5.1 | 0.3 | 5.1 | 1.5 |
| | Al₂O₃ | 0.4 | 1.7 | 0.3 | 1.2 |
| | MgO | - | - | 0.2 | - |
| | SiO₂ | 0.1 | - | - | - |
| | Fe₂O₃ | 0.5 | - | 0.5 | 1.5 |
| | CeO₂ | 0.2 | 0.3 | - | - |
| Melting atmosphere | | Air atmosphere | Air atmosphere | Air atmosphere | Air atmosphere |
| Pressure during melting | | Atmospheric pressure | Atmospheric pressure | Atmospheric pressure | Atmospheric pressure |
| Bubbling | | Not performed | Not performed | Not performed | Performed (Water vapor) |
| Forming method | | Drop molding | Drop molding | Drop molding | Drop molding |
| Glass transition point (°C) | | 340 | 344 | 341 | 340 |
| Yield point (°C) | | 357 | 361 | 359 | 357 |
| Thermal expansion coefficient (×10⁻⁷/°C) | | 109 | 104 | 108 | 110 |
| Total amount of gases produced (µL/cm³) | | 2567 | 1758 | 2633 | 5789 |
| Flowability | | ○ | ○ | ○ | ○ |
| Remaining bubble | | ○ | ○ | ○ | ○ |
| Protrusion expansion | | Present | Present | Present | Present |

**[Table 3]**

| | | Example | | |
|---|---|---|---|---|
| | | j | k | l |
| Glass composition (mol%) | V₂O₅ | 28 | 29 | 47 |
| | P₂O₅ | 25 | 24 | 32 |
| | Bi₂O₃ | 3 | 5 | 6 |
| | TeO₂ | 2 | - | - |
| | Sb₂O₃ | - | - | 9 |
| | Li₂O | 1.5 | 2 | - |
| | Na₂O | 4.5 | 4 | 4.5 |
| | MgO | - | 1.5 | - |
| | BaO | 5 | 4.5 | - |
| | ZnO | 22 | 22 | - |
| | SiO₂ | - | - | 0.5 |
| | B₂O₃ | 3 | 2.5 | - |
| | CuO | - | 2.5 | - |
| | Fe₂O₃ | 3 | 3 | - |
| | WO₃ | 3 | - | 1 |
| Melting atmosphere | | Air atmosphere | Air atmosphere | Air atmosphere |
| Pressure during melting | | Atmospheric pressure | Atmospheric pressure | Atmospheric pressure |
| Bubbling | | Not performed | Not performed | Performed (Water vapor) |
| Forming method | | Drop molding | Drop molding | Drop molding |
| Glass transition point (°C) | | 326 | 316 | 313 |
| Yield point (°C) | | 345 | 338 | 335 |
| Thermal expansion coefficient (×10⁻⁷/°C) | | 101 | 106 | 104 |
| Total amount of gases produced (µL/cm³) | | 5888 | 4899 | 6732 |
| Flowability | | ○ | ○ | ○ |
| Remaining bubble | | ○ | ○ | ○ |
| Protrusion expansion | | Present | Present | Present |

**[Table 4]**

| | | Comparative Example | | | |
|---|---|---|---|---|---|
| | | m | n | o | p |
| Glass composition (mol%) | SnO | 64 | 49 | 51.8 | 58 |
| | P₂O₅ | 20 | 30.5 | 25 | 28 |
| | ZnO | 3 | 8.5 | 11 | 6 |
| | MgO | - | 0.5 | - | - |
| | Al₂O₃ | 1 | 1 | 0.5 | 1.5 |
| | SiO₂ | - | 5.5 | 1.5 | - |
| | B₂O₃ | 8 | - | 4.5 | 3.5 |
| | WO₃ | 1 | - | 2.5 | - |
| | Li₂O | - | 3 | 1.2 | 0.5 |
| | Na₂O | - | - | - | 2.5 |
| | K₂O | 3 | - | 2 | - |
| | BaO | - | 0.5 | - | - |
| | CeO₂ | - | 1.5 | - | - |
| Melting atmosphere | | Ar atmosphere | N₂ atmosphere | N₂ atmosphere | N₂ atmosphere |
| Pressure during melting | | Atmospheric pressure | Atmospheric pressure | Reduced pressure for 1 hour | Atmospheric pressure |
| Bubbling | | Performed (Dried) | Performed (Dried) | Not performed | Performed (Water vapor) |
| Forming method | | Drop molding | Drop molding | Annealing and cutting | Drop molding |
| Glass transition point (°C) | | 335 | 325 | 344 | 281 |
| Yield point (°C) | | 359 | 348 | 366 | 305 |
| Thermal expansion coefficient (×10⁻⁷/°C) | | 114 | 123 | 108 | 124 |
| Total amount of gases produced (µL/cm³) | | 652 | 445 | 331 | 8111 |
| Flowability | | × | × | × | ○ |
| Remaining bubble | | × | × | × | × |
| Protrusion expansion | | Absent | Absent | Absent | Present |

**[Table 5]**

| | | Comparative Example | | |
|---|---|---|---|---|
| | | q | r | s |
| Glass composition (mol%) | Bi₂O₃ | 41.5 | 45 | 49 |
| | B₂O₃ | 24.4 | 21.8 | 21 |
| | ZnO | 22.5 | 22.3 | 19.5 |
| | BaO | 6 | 4.6 | 5 |
| | SrO | - | 0.3 | 0.3 |
| | CuO | 5.3 | 5 | 4.5 |
| | Al₂O₃ | 0.2 | - | - |
| | MgO | - | 0.2 | - |
| | Fe₂O₃ | 0.1 | 0.5 | 0.5 |
| | CeO₂ | - | 0.3 | 0.2 |
| Condition during melting | | Air atmosphere | Air atmosphere | Air atmosphere |
| Pressure during melting | | Atmospheric pressure | Atmospheric pressure (Reduced pressure during remelting) | Atmospheric pressure |
| Bubbling | | Not performed | Not performed | Performed (Water vapor) |
| Forming method | | Annealing and Cutting | Drop molding | Drop molding |
| Glasstransition point (°C) | | 345 | 340 | 325 |
| Yield point (°C) | | 361 | 357 | 351 |
| Thermal expansion coefficient (×10⁻⁷/°C) | | 106 | 110 | 120 |
| Total amount of gases produced (µL/cm³) | | 754 | 552 | 7899 |
| Flowability | | × | × | ○ |
| Remaining bubble | | × | × | × |
| Protrusion expansion | | Absent | Absent | Present |

**[Table 6]**

| | | Comparative Example | | |
|---|---|---|---|---|
| | | t | u | v |
| Glass composition (mol%) | V₂O₅ | 28 | 58 | 55 |
| | P₂O₅ | 26 | 31 | 28 |
| | Bi₂O₃ | 4 | 1.5 | 1.5 |
| | Sb₂O₃ | - | 6 | 8 |
| | Li₂O | 2 | - | - |
| | Na₂O | 4.5 | - | - |
| | MgO | 0.5 | - | - |
| | CaO | 0.5 | - | - |
| | BaO | 5 | - | - |
| | ZnO | 19.5 | 1 | 5 |
| | SiO₂ | - | 0.5 | 1.5 |
| | B₂O₃ | 3.5 | - | - |
| | Al₂O₃ | - | 2 | 1 |
| | Fe₂O₃ | 4 | - | - |
| | MoO₃ | 2.5 | - | - |
| Melting atmosphere | | Air atmosphere | Air atmosphere | Air atmosphere |
| Pressure during melting | | Atmospheric pressure | Atmospheric pressure | Atmospheric pressure |
| Bubbling | | Not performed | Not performed | Performed (Water vapor) |
| Forming method | | Drop molding | Drop molding | Drop molding |
| Glass transition point (°C) | | 330 | 309 | 294 |
| Yield point (°C) | | 355 | 331 | 317 |
| Thermal expansion coefficient (×10⁻⁷/°C) | | 99 | 107 | 115 |
| Total amount of gases produced (µL/cm³) | | 569 | 876 | 8122 |
| Flowability | | × | × | ○ |
| Remaining bubble | | × | × | × |
| Protrusion expansion | | Absent | Absent | Present |

Each sample described in Tables 1 to 6 was produced as described below.

Samples a to e were each produced as described below. Each glass batch was produced by using a tin monoxide, an orthophosphate (85% phosphate), a zinc oxide, and the like so that the glass batch had each glass composition described in Table 1. The glass batch was loaded into a zirconium crucible and was melted at 900°C for 1 hour under the atmosphere in the table 1 and under the pressure in the table 1. Further, in the case of Sample e, after N₂ was bubbled in water so as to contain water sufficiently, the resultant gases were introduced into a melting atmosphere. Note that after the glass batch was completely melted, the molten glass was dropped on a mold, and immediately after the dropping, the molten glass was formed into a glass having a cylindrical shape by using a mold pressing machine.

Samples f to i were each produced as described below. Each glass batch was produced by using a bismuth oxide, a boric oxide high in water content, an aluminum hydroxide, and the like so that the glass batch had each glass composition described in Table 2. The glass batch was loaded into a platinum-rhodium alloy crucible and was melted at 1000°C for 1 hour under the atmosphere in Table 2 and under the pressure in Table 2. Further, in the case of Sample i, after O₂ was bubbled in water so as to contain water sufficiently, the resultant gases were bubbled in the molten glass. Note that after the glass batch was completely melted, the molten glass was dropped on a mold, and immediately after the dropping, the molten glass was formed into a glass having a cylindrical shape by using a mold pressing machine.

Samples j to 1 were each produced as described below. Each glass batch was produced by using a vanadium pentoxide, an orthophosphate (85% phosphate), a zinc oxide, a boric oxide high in water content, an aluminum hydroxide, and the like so that the glass batch had each glass composition described in Table 3. The glass batch was loaded into a platinum-rhodium alloy crucible and was melted at 1000°C for 1 hour under the atmosphere in Table 3 and under the pressure in Table 3. Further, in the case of Sample 1, after air was bubbled in water so as to contain water sufficiently, the resultant gases were bubbled in the molten glass. Note that after the glass batch was completely melted, the molten glass was dropped on a mold, and immediately after the dropping, the molten glass was formed into a glass having a cylindrical shape by using a mold pressing machine.

Sample m was produced as described below. A glass batch prepared so as to have the glass composition described in Table 4 was loaded into a quartz crucible. After the inside of a melting furnace was substituted with Ar, the glass batch was melted at 950°C for 1 hour under the atmosphere in Table 4 and under the pressure in Table 4 while dried N₂ was being bubbled. Next, immediately after the molten glass was dropped on a mold, the molten glass was formed into a glass having a cylindrical shape by using a mold pressing machine.

Sample n was produced as described below. A glass batch prepared so as to have the glass composition described in Table 4 was loaded into a quartz crucible. After the inside of a melting furnace was substituted with N₂, the glass batch was melted at 950°C for 1 hour under the atmosphere in the table 4 and under the pressure in the table 4 while dried N₂ was being bubbled. Next, immediately after the molten glass was dropped on a mold, the molten glass was formed into a glass having a cylindrical shape by using a mold pressing machine.

Sample O was produced as described below. A glass batch prepared so as to have the glass composition described in Table 4 was loaded into a quartz crucible. After the inside of a melting furnace was substituted with nitrogen, the inside was converted to a state of a reduced pressure of 500 Torr and the glass batch was melted at 900°C for 2 hours under the atmosphere in Table 4 and under the pressure in Table 4. Next, the molten glass was drained so as to have a plate shape and was subjected to an annealing treatment, followed by cutting to pieces having a predetermined volume.

Sample p was produced as described below. A glass batch prepared so as to have the glass composition described in Table 4 was loaded into a quartz crucible. After the inside of a melting furnace was substituted with N₂, N₂ was bubbled in water so as to contain water excessively. After that, while the resultant gases were being bubbled, the glass batch was melted at 950°C for 1 hour under the atmosphere in Table 4 and under the pressure in Table 4. Next, immediately after the molten glass was dropped on a mold, the molten glass was formed into a glass having a cylindrical shape by using a mold pressing machine.

Sample q was produced as described below. A glass batch was produced by using a glass material low in water content so as to have the glass composition described in Table 5. The glass batch was loaded into a platinum crucible and was melted at 1000°C for 2 hours under the atmosphere in Table 5 and under the pressure in Table 5. Next, the molten glass was drained so as to have a plate shape and was subjected to an annealing treatment, followed by cutting to pieces having a predetermined volume.

Samples q and r were produced as described below. A glass batch was produced by using a glass material low in water content so as to have the glass composition described in Table 5. The glass batch was loaded into a platinum crucible and was melted at 1000°C for 2 hours under the atmosphere in Table 5 and under the pressure in Table 5. Next, the molten glass was drained into a carbon mold to yield a glass block. Note that an annealing treatment was not carried out after the formation. Further, after the resultant glass block was remelted under a reduced pressure environment, drop molding was carried out.

Sample s was produced as described below. A glass batch was produced by using a glass material high in water content so as to have the glass composition described in Table 5 and was loaded into a platinum crucible, and then O₂ was bubbled in water so as to contain water excessively. After that, while the resultant gases were being bubbled, the glass batch was melted at 1000°C for 2 hours under the atmosphere in Table 5 and under the pressure in Table 5. Next, the molten glass was drained so as to have a plate shape and was subjected to an annealing treatment, followed by cutting to pieces having a predetermined volume.

Samples t and u were each produced as described below. Each glass batch prepared by using a glass material low in water content so as to have each glass composition described in Table 6 was loaded into an alumina crucible. The glass batch was melted at 950°C for 1 hour under the atmosphere in Table 6 and under the pressure in Table 6. Next, immediately after the molten glass was dropped on a mold, the molten glass was formed into a glass having a cylindrical shape by using a mold pressing machine.

Sample v was produced as described below. A glass batch was produced by using a glass material high in water content so as to have the glass composition described in Table 6 and was loaded into a platinum crucible, and then air was bubbled in water so as to contain water excessively. After that, while the resultant gases were being bubbled, the glass batch was melted at 950°C for 2 hours under the atmosphere in Table 6 and under the pressure in Table 6. Next, immediately after the molten glass was dropped on a mold, the molten glass was formed into a glass having a cylindrical shape by using a mold pressing machine.

Each of the resultant samples was evaluated for a glass transition point, a yield point, a thermal expansion coefficient, the total amount of gases produced, flowability, remaining bubbles, and expansion on a protrusion.

The glass transition point, the yield point, and the thermal expansion coefficient are values calculated with a push-bar-type thermal dilatometer (TMA manufactured by Rigaku Corporation). The size of each sample to be measured was set to 20×5 mm in diameter. Note that the thermal expansion coefficient is a value measured in the temperature range of 30 to 250°.

The total amount of gases produced was evaluated as described below. Each of the samples was crushed so as not to become a powder state, to make measurement sample of fragments each having a volume of 35 mm³. After the measurement sample was loaded into a measuring apparatus, the air in the measuring apparatus was exhausted by using an oil rotary pump (rotary pump). After that, the mode of the measuring apparatus was switched to a circuit for temperature-programmed desorption analysis, and vacuum exhaust was performed by using a turbo-molecular pump. The vacuum exhaust was continued until the pressure in the system reached a pressure ranging from 1.0×10⁻⁵ Pa to 3.0×10⁻⁵ Pa which is a stabilized pressure in the system. When the pressure reached the above range, the measurement was heated from room temperature to 700°C at 15°C per minute while the operation conditions of the pump were being maintained. During the heating, gases produced were introduced into a mass spectrometer to measure the total amount of the gases. Note that the analysis of mass spectra provided by the mass spectrometry can lead to the calculation of the total amount of the gases.

The flowability, the remaining bubbles, and the expansion on a protrusion were evaluated as described below. Each sample was formed (molded) into a cylindrical shape of an outer diameter of 5.3 mm and a height of 3.0 mm by the above-mentioned method. Then such the sample was placed on a substrate made of stainless steel SUS304 having a dimension of 40 mm square by 0.5 mm thickness and was baked in a vacuum baking furnace. The baking condition was set to the condition that furnace temperature was raised from room temperature to 400°C at 20°C/minute, the temperature was kept at 400°C for 20 minutes, the furnace temperature was raised from 400°C to 500°C at 20°C/minute, the temperature was kept at 500°C for 20 minutes, and then the furnace temperature was lowered to room temperature at 20°C/minute. Note that the actual production of a metal-made vacuum double container is generally carried out by using a batch transfer system (method in which a batch is transferred between vacuum baking furnaces which are separately controlled in terms of temperature), and hence the temperature rising rate was set to 20°C/minute. The vacuum condition was set to the condition that the pressure was reduced to a range of 1×10⁻² Pa to 1×10⁻³ Pa before the temperature rise by using a rotary pump and a turbo-molecular pump in combination, and the operation conditions of the pumps were maintained until the temperature declined to 300°C. Finally, the outer diameter of each sample after baking was measured at four points. The case where the average of the measurement values was 9 mm or more was defined as "○" and the case where the average of the measurement values was less than 9 mm was defined as "×." The flowability was evaluated based on the above definitions. In addition, the cross-section of the each sample after baking was observed. The case where bubbles having a diameter of 1 mm or more did not remain was defined as "○" and the case where bubbles having a diameter of 1 mm or more remained was defined as "×." The remaining bubbles were evaluated based on the above definitions. Moreover, the each sample after baking was checked to confirm whether a protrusion expansion (see Fig. 8) attributable to the burst of a bubble was present or absent.

As evident from Tables 1 to 6, in Samples a to 1, the evaluations of the flowability and remaining bubbles were good and protrusion expansions were able to be confirmed, because the total amount of gases produced was within a predetermined range. On the other hand, in each of Samples m to v, the evaluation of the flowability and/or remaining bubbles was not good, because the total amount of gases produced was out of the predetermined range. Further, in each of Samples m to o, q, r, t, and u, no protrusion expansion was able to be confirmed.

### Reference Signs List

- 1: exterior container
- 2: hollow portion
- 3: interior container
- 4: recess portion
- 5: sealing glass
- 6: exhaust opening
- 10: metal-made vacuum double container

## Claims

1. A sealing glass for vacuum sealing an exhaust opening provided in a metal-made vacuum double container, wherein:
the sealing glass is used in a metal-made vacuum double container having a structure in which the sealing glass is placed in a position excepting a position right over the exhaust opening in a vacuum sealing process;
the sealing glass is substantially free of a Pb component; and
the sealing glass produces a total amount of gases of 900 to 7000 µL/cm³ when a temperature is raised from 30°C to 700°C at 15°C/minute in a vacuum state.

2. The sealing glass according to claim 1, wherein the sealing glass produces the total amount of gases of 1500 to 5000 µL/cm³ when the temperature is raised from 30°C to 700°C at 15°C/minute in the vacuum state.

3. The sealing glass according to claim 1, wherein the sealing glass produces the total amount of gases of 900 to 7000 µL/cm³ when the temperature is raised to 700°C after a pressure is reduced to a range of 1.0×10⁻⁵ to 3.0×10⁻⁵ Pa by using a vacuum pump before the temperature is raised, while operation conditions of the vacuum pump are maintained.

4. The sealing glass according to claim 1, wherein the sealing glass produces the total amount of gases of 1500 to 5000 µL/cm³ when the temperature is raised to 700°C after a pressure is reduced to a range of 1.0×10⁻⁵ to 3.0×10⁻⁵ Pa by using a vacuum pump before the temperature is raised, while operation conditions of the vacuum pump are maintained.

5. The sealing glass according to any one of claims 1 to 4, wherein the sealing glass is formed by a drop molding method.

6. The sealing glass according to any one of claims 1 to 4, wherein the sealing glass is produced by extruding a molten glass into a mold.

7. The sealing glass according to any one of claims 1 to 6, wherein the sealing glass contains, as a glass composition in terms of mol%, 30 to 70% of SnO, 15 to 40% of P₂O₅, 0 to 20% of ZnO, 0 to 20% of MgO, 0 to 10% of Al₂O₃, 0 to 15% of SiO₂, 0 to 30% of B₂O₃, 0 to 20% of WO₃, and 0 to 20% of Li₂O+Na₂O+K₂O+Cs₂O.

8. The sealing glass according to any one of claims 1 to 6, wherein the sealing glass contains, as a glass composition in terms of mol%, 20 to 55% of Bi₂O₃, 10 to 40% of B₂O₃, 0 to 30% of ZnO, 0 to 15% of BaO+SrO, 0 to 20% of CuO, and 0 to 10% of Al₂O₃.

9. The sealing glass according to any one of claims 1 to 6, wherein the sealing glass contains, as a glass composition in terms of mol%, 20 to 60% of V₂O₅, 10 to 40% of P₂O₅, 0 to 30% of Bi₂O₃, 0 to 40% of TeO₂, 0 to 25% of Sb₂O₃, 0 to 20% of Li₂O+Na₂O+K₂O+Cs₂O, and 0 to 30% of MgO+CaO+SrO+BaO.

10. A method of sealing a metal-made vacuum double container, wherein an exhaust opening provided in the metal-made vacuum double container is vacuum sealed, the method comprising the steps of:
using a sealing glass substantially free of a Pb component;
placing the sealing glass in a position excepting a position right over the exhaust opening; and
vacuum sealing the exhaust opening in a vacuum sealing process by causing the sealing glass to arrive at the exhaust opening while causing the sealing glass to produce gases.
